# FASCICULE DE BREVET EUROPEEN

(11) **EP 3 756 390 B1**
(45) Date de publication et mention de la délivrance du brevet: **26.04.2023**
(21) Numéro de dépôt: 19700736.2
(22) Date de dépôt: 21.01.2019
(51) Int. Cl.: H04W 64/00, H04W 48/16, H04W 88/02

(54) **GESTION DE L'ITINÉRANCE D'UN TERMINAL MOBILE PAR ADAPTATION DYNAMIQUE DE LA PÉRIODE DE RECHERCHE DE RÉSEAUX DE RADIOCOMMUNICATION**
VERWALTUNG DES ROAMING EINES MOBILEN ENDGERÄTS DURCH DYNAMISCHE ANPASSUNG DER SUCHPERIODE EINES FUNKKOMMUNIKATIONSNETZWERKS
MANAGEMENT OF THE ROAMING OF A MOBILE TERMINAL BY DYNAMIC ADAPTATION OF THE RADIOCOMMUNICATION NETWORKS SEARCH PERIOD

(30) Priorité: 19.02.2018 FR 1851419
(43) Date de publication de la demande: 30.12.2020
(73) Titulaire: Renault s.a.s, 92100 Boulogne Billancourt (FR); NISSAN MOTOR CO., LTD., Yokohama-shi, Kanagawa 221-0023 (JP)
(72) Inventeur: MARQUE, Jean, 31830 Plaisance du Touch (FR); BUSSON, Sebastien, 31300 TOULOUSE (FR); STRUILLOU, Pierre-Yves, 31620 Castelnau D'Estretefonds (FR); FEUILLET, Bruno, 75015 PARIS (FR)
(74) Mandataire: Renault Group
(86) Numéro de dépôt international: PCT/EP2019/051353
(87) Numéro de publication internationale: WO 2019/158314

(56) Documents cités:
- EP-A1- 1 469 696
- WO-A1-2010/130759
- WO-A1-2015/154789
- US-A1- 2016 353 362

## Description

### DOMAINE DE L'INVENTION

La présente invention est relative à la gestion de l'itinérance pour un terminal de radiocommunication. Plus particulièrement, elle vise à optimiser l'autonomie des terminaux mobiles en itinérance, et notamment des terminaux embarqués sur un véhicule automobile.

### CONTEXTE DE L'INVENTION

Un terminal mobile de radiocommunication est classiquement attaché à un unique réseau nominal de radiocommunication ou HPLMN pour "*Home Public Land Mobile Network*". Cet attachement est effectué lors de l'abonnement de l'utilisateur du terminal auprès d'un opérateur de téléphonie mobile et est mémorisé au sein d'une carte SIM insérée au sein du terminal.

Lorsqu'un terminal mobile utilisant une connectivité cellulaire est en itinérance, on observe une consommation énergétique accrue par rapport à lorsqu'il utilise son réseau nominal. Cet inconvénient est rendu encore plus prégnant par le fait qu'en itinérance, l'utilisateur peut rencontrer davantage de difficultés pour recharger la batterie de son terminal. On estime la surconsommation à près de 40%.

De la même façon, dans le cas d'un véhicule connecté, le terminal mobile embarqué peut être en itinérance lorsque le véhicule franchit une frontière. La surconsommation peut engendrer la diminution de l'autonomie des services connectés et donc une interruption des services connectés. Dans certains cas, elle peut même vider la batterie du véhicule, et ainsi empêcher son prochain démarrage.

La raison technique sous-jacente provient du fait que le terminal mobile en itinérance recherche périodiquement les réseaux mobile de son environnement. Parmi les réseaux mobiles présents, le terminal cherche à se connecter soit à son réseau nominal, HPLMN, auprès duquel l'utilisateur a souscrit un abonnement, soit à un meilleur réseau permettant d'améliorer la qualité de service ou de diminuer les coûts engendrés par l'utilisation du réseau.

La période de ces interrogations est un paramètre habituellement fixé par l'opérateur du réseau nominal et stocké dans la carte SIM du terminal mobile. Selon les normes 3GPP, la valeur de cette période est comprise entre 6 minutes et 8 heures, par pas de 6 minutes. Elle est typiquement de 18 minutes. Ainsi, toutes les 18 minutes, par exemple, le terminal mobile cherche l'ensemble des réseaux de radiocommunication disponibles, effectue des mesures de qualité, etc. et l'utilisation de différents circuits pour effectuer ces traitements engendre au fil des interrogations une consommation électrique importante.

Différentes propositions ont été faites afin d'essayer d'améliorer la situation pour les terminaux en itinérance.

La demande de brevet WO2015154789 adapte la période d'interrogation en fonction de la distance géographique entre le réseau auquel est rattaché le terminal mobile en itinérance et son réseau nominal.

Toutefois, une telle approche est inopérante dans un certain nombre de situation, notamment pour un terminal mobile connecté durablement au réseau d'un autre opérateur dans une zone frontalière de son pays d'origine, mais avec lequel un accord d'itinérance a été souscrit. Dans ce cas, les interrogations seront très fréquentes malgré une bonne qualité de service et un faible coût.

La solution décrite par la demande de brevet US2014073320 se base sur la qualité de réception du signal provenant du réseau de rattachement courant et des cellules voisines. Si les conditions sont considérées comme assez bonnes, le terminal mobile connecté décide d'arrêter les interrogations jusqu'à la détection d'un mouvement physique du terminal via un accéléromètre embarqué.

Cette solution ne répond clairement pas à la problématique d'un terminal mobile en mouvement et en itinérance sur un réseau lui assurant un bon couple coût/qualité de service, par exemple d'un terminal mobile embarqué sur un véhicule automobile en circulation, qui, par définition, sera presque continûment en mouvement. En outre, cette solution stoppe l'interrogation périodique pour une durée indéterminée, interrompue uniquement par un mouvement physique du terminal, ce qui empêche la sélection d'un réseau fournissant un meilleur couple qualité de service/coût.

La demande de brevet WO2015154789 décrit un mécanisme d'affectation dynamique d'une période de lecture des PLMN disponibles en fonction de l'appartenance ou non du PLMN courant à une liste de PLMN préférés.

### RESUME DE L'INVENTION

Le but de la présente invention est de fournir une solution palliant au moins partiellement les inconvénients précités. Plus particulièrement, l'invention vise à fournir un mécanisme permettant un bon équilibre entre l'optimisation de l'autonomie du terminal mobile et l'importance de rechercher un meilleur réseau lorsque cela est possible, voire de se rattacher au réseau nominal dès que possible.

A cette fin, la présente invention propose un procédé de gestion de l'itinérance d'un terminal mobile attaché à un réseau nominal de radiocommunication, HPLMN, ledit procédé étant implémenté dans ledit terminal mobile et comportant, lorsque le réseau de rattachement courant n'est pas ledit réseau nominal, une recherche des réseaux disponibles selon une période stockée dans ledit terminal, afin de considérer un basculement de réseau de rattachement courant; ledit procédé comportant également
- une comparaison de l'identifiant dudit réseau de rattachement courant avec une liste d'identifiants de réseaux préférés, et
- une détermination de ladite période en fonction du résultat de ladite comparaison, de sorte que ladite période déterminée est plus grande lorsque ledit réseau de rattachement courant appartient auxdits réseaux préférés, ledit procédé étant caractérisé en ce que ladite liste est ordonnée selon des priorités, et en ce que, lorsque ledit réseau de rattachement courant est parmi lesdits réseaux préférés, ladite période est déterminée selon la priorité associée audit réseau de rattachement courant, ladite période T étant déterminée selon la relation T=max(Tₘₐₓ/f(P), Tₘᵢₙ) dans laquelle P est ladite priorité, f(P) une fonction croissante, Tₘₐₓ une valeur maximale pour la période et Tₘᵢₙ une période minimale pour la période.

Suivant des modes de réalisation préférés, l'invention comprend une ou plusieurs des caractéristiques suivantes qui peuvent être utilisées séparément ou en combinaison partielle entre elles ou en combinaison totale entre elles :
- lorsque ledit réseau de rattachement courant n'est pas parmi lesdits réseaux préférés, ladite période déterminée est égale à ladite période minimale Tₘᵢₙ ;
- ladite période est également déterminée en fonction d'une distance géographique entre ledit terminal mobile et ledit réseau nominal ;
- ladite période est également déterminée en fonction d'une probabilité de basculement proche vers ledit réseau nominal estimée à partir d'un profil de l'utilisateur dudit terminal ;
- un mécanisme d'apprentissage automatique est mis en oeuvre pour la détermination de ladite période ;

Un autre objet de l'invention concerne un terminal mobile associée à une carte SIM contenant des informations concernant un attachement à un réseau nominal de radiocommunication, HPLMN, ledit terminal comportant des moyens pour, lorsque le réseau de rattachement courant n'est pas ledit réseau nominal, effectuer une recherche des réseaux disponibles selon une période stockée dans ladite carte SIM du terminal, afin de considérer un basculement de réseau de rattachement courant; lesdits moyens étant également adaptés pour
- comparer l'identifiant dudit réseau de rattachement courant avec une liste d'identifiants de réseaux préférés, et
- déterminer ladite période en fonction du résultat de ladite comparaison, de sorte que ladite période déterminée est plus grande lorsque ledit réseau de rattachement courant appartient auxdits réseaux préférés, ledit terminal étant caractérisé en ce que ladite liste est ordonnée selon des priorités, et en ce qu'il comprend des moyens pour, lorsque ledit réseau de rattachement courant est parmi lesdits réseaux préférés, déterminer ladite période selon la priorité associée audit réseau de rattachement courant selon la relation T=max(Tₘₐₓ/f(P), Tₘᵢₙ) dans laquelle P est ladite priorité, f(P) une fonction croissante, Tₘₐₓ une valeur maximale pour la période et Tₘᵢₙ une période minimale pour la période.

Un autre objet de l'invention concerne un véhicule comportant un terminal mobile tel que précédemment défini.

Ainsi, l'invention permet de trouver un bon compromis entre la réduction des besoins en énergie et le maintien de la capacité du terminal à trouver un meilleur réseau de rattachement quand celui-ci est disponible, grâce à une adaptation dynamique de la période de recherche des réseaux disponibles.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

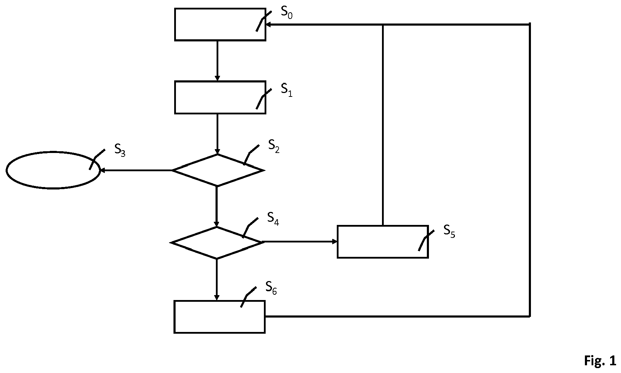

La figure 1 représente schématiquement un exemple d'organigramme illustrant un mode de réalisation de l'invention.

### DESCRIPTION DETAILLEE DE L'INVENTION

Un réseau mobile terrestre public (en anglais « Public land Mobile Network » ou PLMN) également appelé « réseau public terrestre », est un réseau de télécommunications qui permet aux utilisateurs autorisés d'accéder à différents services (téléphonie, messagerie, transmissions de données, diffusions de contenus audiovisuels, etc.) en situation de mobilité, à partir de terminaux mobiles ou portatifs. Selon le pays et l'opérateur, il peut reposer sur différentes architectures normalisées comme les architectures GSM, CDMA, UMTS, LTE, 5G, etc.

Le HPLMN ou « Home PLMN » est le réseau PLMN auprès duquel un abonnement a été souscrit par l'utilisateur. Dans la suite, on appellera ce réseau « réseau nominal », pour l'utilisateur en question, et son identifiant, ainsi que d'autres données (paramètres de connexion...) sont stockées dans la carte SIM de l'utilisateur qui est embarqué dans son terminal mobile.

Le réseau nominal correspond en général à un opérateur d'un pays ou d'une zone géographique de couverture donnée, mais il peut aussi être un réseau PLMN de type non-géographique (« *Mobile Country Code* », MCC =901, selon les normes ITU-T), notamment utilisés par les objets connectés de type M2M (« machine à machine »).

Le terminal mobile peut être un téléphone mobile de télécommunication, notamment de type « smartphone », une tablette numérique, un ordinateur portable, une clé USB, un objet connecté tel que, par exemple, une montre connectée, etc. Il peut également s'agir d'un terminal embarqué, par exemple, dans un véhicule automobile, formant ainsi un système « véhicule connecté » permettant d'apporter aux conducteurs et/ou passagers du véhicule des services connectés.

Lorsqu'un terminal mobile ne peut plus se connecter à son réseau nominal, un mécanisme de recherche des réseaux PLMN disponibles est déclenché de façon périodique. Le but de cette recherche est de trouver un meilleur réseau, afin de déclencher en ce cas le basculement du terminal mobile vers ce « meilleur » réseau.

La période est stockée au sein du terminal mobile, typiquement dans la carte SIM associée à celui-ci, et fixée par l'opérateur.

Dans le cadre d'une mise en oeuvre sur un réseau 4G tel que normalisée par le 3GPP, cette période peut être stockée dans le champ EF_{HPPLMN} de la carte USIM (« Universal SIM »). Ce champ EF_{HPPLMN} est explicité dans la norme 3GPP TS 31.102 (« Characteristics of the USIM application »*),* notamment en section 4.2.6. Les mécanismes de recherche en tant que tels sont explicités dans d'autres documents issus du 3GPP, notamment dans 3GPP TS 22.011.

Sur l'organigramme illustré en figure 1, une première étape S1 consiste à effectuer cette recherche des PLMN disponibles et de basculer vers un « meilleurs » réseau, lorsque des critères prédéfinis sont remplis. Cette recherche peut se faire selon tout ou partie des interfaces radios disponibles sur le terminal mobile : 2G, 3G, 4G...

Le mécanisme de choix d'un « meilleur » réseau n'entre pas dans le cadre de l'invention, et différents mécanismes peuvent être mis en oeuvre.

Toutefois, typiquement, ce choix se base sur la comparaison entre un ensemble de réseaux PLMN disponibles, déterminé par l'interface radio du terminal mobile, et une liste de réseaux préférés.

Ces réseaux préférés sont typiquement fixés et/ou gérés par l'opérateur et leurs identifiants sont stockées dans la carte SIM associée au terminal mobile. En fait, l'étape S1 peut consister à choisir le « meilleur » réseau PLMN parmi l'intersection ensembliste entre les réseaux PLMN disponibles et la liste des réseaux préférées stockées dans la carte SIM du terminal.

Selon une mise en oeuvre sur une architecture 4G, ces mécanismes sont notamment explicités dans la norme 3GPP TS 23.122, « Non-Access-Stratum (NAS) functions related to Mobile Station (MS) in idle mode », et 3GPP TS 22.011 « Service Accessibility » dans lesquelles les réseaux préférés sont nommés « *Equivalent-Home PLMN* », « Higher PLMN priority», « *Operator Controlled PLMN Selector list* » ou « *User Controlled PLMN Selector list* », et sont présents notamment dans les fichiers de carte SIM tels que EHPLMN, EFPLMNlist ou EFPLMNwAcT. D'une façon plus générale, cette liste est basée sur des accords d'itinérance (ou « *roaming »* selon le vocabulaire en langue anglaise) entre opérateurs. Elle garantit pour l'opérateur et pour l'utilisateur un bon rapport entre le coût des communications (voix, données...) en itinérance et la qualité de service. Typiquement, cette liste est ordonnée et le terminal choisit le réseau PLMN d'ordre le plus élevé dans l'intersection ensembliste précédemment évoquée.

Lorsque cette intersection est nulle, c'est-à-dire lorsqu'aucun des réseaux PLMN disponibles n'est dans la liste des réseaux préférés, le terminal mobile se connecte au réseau PLMN disponible présentant le meilleur niveau de réception.

Cette étape S1 de recherche des réseaux disponibles afin de considérer un éventuel basculement est déclenchée de façon périodique. L'étape S0 illustre une étape d'attente (« *Wait* ») d'un instant déterminé par cette période.

Dans une étape S2, le terminal mobile compare l'identifiant du réseau PLMN de rattachement déterminé à l'étape S1 à l'identifiant de son réseau nominal.

Dans le cas où ce réseau de rattachement courant est le réseau nominal, le mécanisme de recherche périodique peut être interrompu, S3. Il pourra reprendre lorsque le terminal mobile détectera qu'il n'est plus connecté à son réseau nominal. Autrement dit, le mécanisme de recherche n'est mis en oeuvre que lorsqu'un terminal mobile a détecté ne pas être connecté à son réseau nominal.

Dans le cas où le réseau de rattachement courant n'est pas le réseau nominal, une deuxième comparaison, S4, est effectuée entre l'identifiant de ce réseau de rattachement courant et la liste d'identifiants de réseaux préférés précédemment décrite.

La période de recherche est alors déterminée/réévaluée, S5, S6, en fonction du résultat de cette comparaison, de sorte qu'elle soit plus grande lorsque le réseau de rattachement courant appartient aux réseaux préférés.

Plusieurs mises en oeuvre sont alors possibles.

Notamment, selon une première mise en oeuvre, deux valeurs de période, Tₘᵢₙ, Tₘₐₓ peuvent être prédéterminés, avec Tₘᵢₙ<Tₘₐₓ, de sorte que
- la période est modifiée à la valeur Tₘᵢₙ, si le réseau de rattachement n'appartient pas aux réseaux préférés (étape S5), et
- la période est modifiée à la valeur Tₘₐₓ, si le réseau de rattachement appartient aux réseaux préférés (étape S6) .

Selon une autre mise en oeuvre, dans l'étape S6, on considère que la liste des réseaux préférés est ordonnée selon des priorités. Lorsque le réseau de rattachement appartient aux réseaux préférés, la période est choisie en fonction la priorité associée au réseau en question.

Cet ordre peut consister à définir un certain nombre de groupes, chacun affecté à une priorité donnée, et on associe alors une priorité pour chacun de ces groupes. L'ordre peut aussi consister en un classement individuel, selon lequel chaque réseau préféré est classé par rapport aux autres. Une période peut alors être associée à chacun des réseaux préférés individuellement. Pour ce faire une loi peut être définie pour déterminer une période T en fonction d'un numéro d'ordre dans ce classement.

D'autres mises en oeuvre sont possibles.

Selon un mode de réalisation, lorsqu'on obtient une priorité P pour le réseau de rattachement courant, on peut déterminer la période T selon une relation T=max(Tₘₐₓ/f(P), Tₘᵢₙ) ; dans laquelle f(P) est une fonction croissante selon P. Cette fonction f(P) peut par exemple être la fonction f(P)=P.

Ainsi, pour une priorité de rang important (P=1), la période peut être T=Tₘₐₓ ; tandis que quand la priorité est de rang inférieur, la période tend vers T=Tₘᵢₙ.

Cette valeur Tₘᵢₙ peut être la même que celle attribué, en étape S5, dans le cas d'un réseau de rattachement n'appartenant pas à la liste des réseaux préférés.

Typiquement, la valeur de la période est réglée par pas de 6 minutes, selon la spécification du 3GPP. La valeur Tₘᵢₙ peut être la valeur minimale autorisée par la spécification du 3GPP, soit 6 minutes.

Ainsi, selon ces différentes mises en oeuvre, on obtient un compromis adaptatif qui répond à la fois à l'exigence de trouver au plus tôt un réseau préféré (voire le HPLMN) tout en minimisant les recherches lorsque le réseau de rattachement est satisfaisant. Pour ce faire, la période est adaptée en fonction d'un degré d' « acceptabilité » du réseau de rattachement : plus celui-ci correspond à un réseau acceptable (HPLMN ou réseau préféré de priorité haute) et plus élevé sera la période inter-recherches. A l'inverse, cette période sera réduite lorsque le réseau de rattachement n'appartient pas aux réseaux préférés ou bien lorsqu'il est un réseau préféré de priorité basse.

Selon un mode de réalisation de l'invention, la période est également déterminée en fonction d'une distance géographique entre le terminal mobile et le réseau nominal.

Différentes mises en oeuvre sont possibles pour prendre en compte à la fois l'appartenance du réseau de rattachement courant aux réseaux préférés, son rang et/ou sa priorité fournie parmi les réseaux préférés et cette distance. Par exemple, il peut être possible de définir une fonction f(P) tel que précédemment évoqué qui prenne en compte en outre la distance géographique.

Une petite distance géographique peut être un indice d'une probabilité élevée de connexion possible ou de connexion bientôt possible avec le réseau nominal. Pour cette raison, il peut être intéressant de diminuer la période T afin de permettre un retour au plus tôt au réseau nominal HPLMN.

D'une façon générale, il s'agit donc de prendre en compte une probabilité de basculement proche vers le réseau nominal pour la détermination de la période T.

Un autre critère pour estimer cette probabilité peut être un profil de l'utilisateur du terminal. Ce profil peut être utilisé indépendamment ou de façon cumulative avec la distance géométrique.

Par exemple, on peut mémoriser dans ce profil d'utilisateur un historique des déplacements habituels de l'utilisateur, et, déterminer la période en fonction de cet historique. Par exemple, si l'utilisateur a l'habitude de faire des allers-retours entre un point A couvert par son réseau nominal, et un point B non-couvert, le terminal peut décider, en sachant que le terminal vient de quitter le point B, que l'utilisateur se dirige vers le point A et estimer une période temporelle dans laquelle il devrait entrer dans la couverture de son réseau nominal. Il peut alors adapter la période T en fonction de ces estimations pour optimiser le basculement vers le réseau nominal.

Ces déterminations et estimations peuvent être mises en oeuvre par un mécanisme d'apprentissage automatique, ou *« machine learning* » en langue anglaise.

Le mécanisme selon l'invention peut être mis en oeuvre uniquement par des moyens logiciels déployés sur le terminal mobile. Cela peut être au sein de la couche applicative ou bien au sein du système d'exploitation du terminal mobile. Dans ces deux cas, l'invention peut donc être mise en place en téléchargeant une application et/ou une mise à jour du système d'exploitation, sans avoir à effectuer des opérations complexes ou des modifications matérielles du parc de terminaux existant.

Le fait que la solution soit uniquement logicielle et que l'algorithme n'utilise que des informations disponibles dans les fichiers de la carte SIM implique une faible complexité d'implémentation et donc un faible coût.

## Revendications

1. Procédé de gestion de l'itinérance d'un terminal mobile attaché à un réseau nominal de radiocommunication, HPLMN, ledit procédé étant implémenté dans ledit terminal mobile et comportant, lorsque le réseau de rattachement courant n'est pas ledit réseau nominal, une recherche (S1) des réseaux disponibles selon une période stockée dans ledit terminal, afin de considérer un basculement de réseau de rattachement courant; ledit procédé comportant également
- une comparaison (S3) de l'identifiant dudit réseau de rattachement courant avec une liste d'identifiants de réseaux préférés, et
- une détermination (S5, S6) de ladite période en fonction du résultat de ladite comparaison, de sorte que ladite période déterminée est plus grande lorsque ledit réseau de rattachement courant appartient auxdits réseaux préférés, ledit procédé étant **caractérisé en ce que** ladite liste est ordonnée selon des priorités, et **en ce que**, lorsque ledit réseau de rattachement courant est parmi lesdits réseaux préférés, ladite période est déterminée selon la priorité associée audit réseau de rattachement courant, ladite période T étant déterminée selon la relation T=max(Tₘₐₓ/f(P), Tₘᵢₙ) dans laquelle P est ladite priorité, f(P) une fonction croissante, Tₘₐₓ une valeur maximale pour la période et Tₘᵢₙ une période minimale pour la période.

2. Procédé selon ladite revendication principale, dans lequel lorsque ledit réseau de rattachement courant n'est pas parmi lesdits réseaux préférés, ladite période déterminée est égale à ladite période minimale Tₘᵢₙ.

3. Procédé selon l'une des revendications précédentes, dans lequel ladite période est également déterminée en fonction d'une distance géographique entre ledit terminal mobile et ledit réseau nominal.

4. Procédé selon l'une des revendications précédentes, dans lequel ladite période est également déterminée en fonction d'une probabilité de basculement proche vers ledit réseau nominal estimée à partir d'un profil de l'utilisateur dudit terminal.

5. Procédé selon la revendication précédente, dans lequel un mécanisme d'apprentissage automatique est mis en oeuvre pour la détermination de ladite période.

6. Terminal mobile associée à une carte SIM contenant des informations concernant un attachement à un réseau nominal de radiocommunication, HPLMN, ledit terminal comportant des moyens pour, lorsque le réseau de rattachement courant n'est pas ledit réseau nominal, effectuer (S1) une recherche des réseaux disponibles selon une période stockée dans ladite carte SIM du terminal, afin de considérer un basculement de réseau de rattachement courant; lesdits moyens étant également adaptés pour
- comparer (S3) l'identifiant dudit réseau de rattachement courant avec une liste d'identifiants de réseaux préférés, et
- déterminer (S5, S6) ladite période en fonction du résultat de ladite comparaison, de sorte que ladite période déterminée est plus grande lorsque ledit réseau de rattachement courant appartient auxdits réseaux préférés, ledit terminal étant **caractérisé en ce que** ladite liste est ordonnée selon des priorités, et **en ce qu'**il comprend des moyens pour, lorsque ledit réseau de rattachement courant est parmi lesdits réseaux préférés, déterminer ladite période selon la priorité associée audit réseau de rattachement courant selon la relation T=max(Tₘₐₓ/f(P), Tₘᵢₙ) dans laquelle P est ladite priorité, f(P) une fonction croissante, Tₘₐₓ une valeur maximale pour la période et Tₘᵢₙ une période minimale pour la période.

7. Véhicule comportant un terminal mobile selon la revendication précédente.

## Patentansprüche

1. Verfahren zur Verwaltung des Roamings eines mobilen Endgeräts, das mit einem Heimatmobilfunknetz, HPLMN, verbunden ist, wobei das Verfahren im mobilen Endgerät implementiert ist und, wenn das aktuelle Anschlussnetz nicht das Heimatnetz ist, eine Suche (S1) der verfügbaren Netzwerke gemäß einer im Endgerät gespeicherten Periode aufweist, um ein Wechseln des aktuellen Anschlussnetzes zu erwägen; wobei das Verfahren ebenfalls aufweist
- einen Vergleich (S3) der Kennung des aktuellen Anschlussnetzes mit einer Liste von Kennungen bevorzugter Netze, und
- eine Bestimmung (S5, S6) der Periode abhängig vom Ergebnis des Vergleichs derart, dass die bestimmte Periode größer ist, wenn das aktuelle Anschlussnetz zu den bevorzugten Netzen gehört,
wobei das Verfahren **dadurch gekennzeichnet ist, dass** die Liste gemäß Prioritäten geordnet ist, und dass, wenn das aktuelle Anschlussnetz unter den bevorzugten Netzen ist, die Periode gemäß der dem aktuellen Anschlussnetz zugeordneten Priorität bestimmt wird, wobei die Periode T gemäß der Beziehung T=max (Tₘₐₓ/f(P), Tₘᵢₙ) bestimmt wird, in der P die Priorität, f(P) eine zunehmende Funktion, Tₘₐₓ ein maximaler Wert für die Periode und Tₘᵢₙ eine minimale Periode für die Periode ist.

2. Verfahren nach dem Hauptanspruch, wobei, wenn das aktuelle Anschlussnetz nicht unter den bevorzugten Netzwerken ist, die bestimmte Periode gleich der minimalen Periode Tₘᵢₙ ist.

3. Verfahren nach einem der vorhergehenden Ansprüche, wobei die Periode ebenfalls abhängig von einer geographischen Entfernung zwischen dem mobilen Endgerät und dem Heimatnetz bestimmt wird.

4. Verfahren nach einem der vorhergehenden Ansprüche, wobei die Periode ebenfalls abhängig von einer nahen Wechselwahrscheinlichkeit zum Heimatnetz bestimmt wird, die ausgehend von einem Profil des Benutzers des Endgeräts geschätzt wird.

5. Verfahren nach dem vorhergehenden Anspruch, wobei ein automatischer Lernmechanismus zur Bestimmung der Periode verwendet wird.

6. Mobiles Endgerät, das einer SIM-Karte zugeordnet ist, die Informationen betreffend eine Verbindung mit einem Heimatmobilfunknetz, HPLMN, enthält, wobei das Endgerät Einrichtungen aufweist, um, wenn das aktuelle Anschlussnetz nicht das Heimatnetzwerk ist, eine Suche der verfügbaren Netzwerke gemäß einer in der SIM-Karte des Endgeräts gespeicherten Periode auszuführen (S1), um ein Wechseln des aktuellen Anschlussnetzes zu erwägen; wobei die Einrichtungen ebenfalls geeignet sind, um
- die Kennung des aktuellen Anschlussnetzes mit einer Liste von Kennungen bevorzugter Netzwerke zu vergleichen (S3), und
- die Periode abhängig vom Ergebnis des Vergleichs derart zu bestimmen (S5, S6), dass die bestimmte Periode größer ist, wenn das aktuelle Anschlussnetz zu den bevorzugten Netzwerken gehört,
wobei das Endgerät **dadurch gekennzeichnet ist, dass** die Liste gemäß Prioritäten geordnet ist, und dass es Einrichtungen enthält, um, wenn das aktuelle Anschlussnetz unter den bevorzugten Netzwerken ist, die Periode gemäß der dem aktuellen Anschlussnetz zugeordneten Priorität gemäß der Beziehung T=max(Tₘₐₓ/f(P), Tₘᵢₙ) zu bestimmen, in der P die Priorität, f(P) eine zunehmende Funktion, Tₘₐₓ ein maximaler Wert für die Periode und Tₘᵢₙ eine minimale Periode für die Periode ist.

7. Fahrzeug, das ein mobiles Endgerät nach dem vorhergehenden Anspruch aufweist.

## Claims

1. Method for managing the roaming of a mobile terminal attached to a nominal radiocommunication network, HPLMN, said method being implemented in said mobile terminal and comprising, when the current attachment network is not said nominal network, a search (S1) for the available networks according to a period stored in said terminal, so as to consider a switchover of current attachment network; said method also comprising
- a comparison (S3) of the identifier of said current attachment network with a list of identifiers of preferred networks, and
- a determination (S5, S6) of said period as a function of the result of said comparison, so that said determined period is larger when said current attachment network belongs to said preferred networks, said method being **characterized in that** said list is ordered according to priorities, and **in that**, when said current attachment network is among said preferred networks, said period is determined according to the priority associated with said current attachment network, said period T being determined according to the relation T=max(Tₘₐₓ/f(P), Tₘᵢₙ) in which P is said priority, f(P) an increasing function, Tₘₐₓ a maximum value for the period and Tₘᵢₙ a minimum period for the period.

2. Method according to said main claim, wherein when said current attachment network is not among said preferred networks, said determined period is equal to said minimum period Tₘᵢₙ.

3. Method according to either of the preceding claims, wherein said period is also determined as a function of a geographical distance between said mobile terminal and said nominal network.

4. Method according to one of the preceding claims, wherein said period is also determined as a function of a probability of close switchover to said nominal network, estimated on the basis of a profile of the user of said terminal.

5. Method according to the preceding claim, wherein which a machine learning mechanism is implemented for the determination of said period.

6. Mobile terminal associated with a SIM card containing information relating to an attachment to a nominal radiocommunication network, HPLMN, said terminal comprising means for, when the current attachment network is not said nominal network, performing (S1) a search for the available networks according to a period stored in said SIM card of the terminal, so as to consider a switchover of current attachment network; said means also being adapted to
- compare (S3) the identifier of said current attachment network with a list of identifiers of preferred networks, and
- determine (S5, S6) said period as a function of the result of said comparison, so that said determined period is larger when said current attachment network belongs to said preferred networks, said terminal being **characterized in that** said list is ordered according to priorities, and **in that** it comprises means for, when said current attachment network is among said preferred networks, determining said period according to the priority associated with said current attachment network according to the relation T=max(Tₘₐₓ/f(P), Tₘᵢₙ) in which P is said priority, f(P) an increasing function, Tₘₐₓ a maximum value for the period and Tₘᵢₙ a minimum period for the period.

7. Vehicle comprising a mobile terminal according to the preceding claim.
